(19) Europäisches Patentamt / European Patent Office / Office européen des brevets

(11) **EP 2 892 165 A1**

## EUROPEAN PATENT APPLICATION
published in accordance with Art. 153(4) EPC

(12)

(43) Date of publication:
**08.07.2015 Bulletin 2015/28**

(21) Application number: **12883733.3**

(22) Date of filing: **27.12.2012**

(51) Int Cl.:
*H04B 7/14* (2006.01)    *H04B 7/04* (2006.01)

(86) International application number:
**PCT/KR2012/011611**

(87) International publication number:
**WO 2014/035017 (06.03.2014 Gazette 2014/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.08.2012 KR 20120095505**

(71) Applicants:
• **MTI Co. , Ltd.**
**Songpa-Gu**
**Seoul**
**138-810 (KR)**
• **Cho, Hyung-Sik**
**Gyeonggi-do 463-905 (KR)**

• **Kisan Telecom Co. Ltd.**
**Seoul 138-828 (KR)**

(72) Inventors:
• **CHO, Hyung-Sik**
**Gyeonggi-do 463-905 (KR)**
• **EEM, Ki-Ho**
**Seongnam**
**Gyeonggi-do 463-823 (KR)**
• **PARK, Byung-gi**
**Seoul 138-919 (KR)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **MIMO RELAY DEVICE**

(57) Provided is a multiple input multiple output (MIMO) relay apparatus for effectively relaying MIMO signals applied to a multiple access type wireless communication system, such as a long term evolution (LTE) communication system. A transmission channel matrix between service antennas and the terminal is made as 2 X 2, MIMO signals of the base station or repeater are transmitted to the service antennas by using one cable, and two or more transceivers (or referred to as a downward/upward signal amplification unit) are disposed in the relay apparatus so as to form two or more paths in one cable, and a frequency down part and a frequency up part of at least one transceiver between two or more transceivers are separated from each other and are implemented at a donor connected to the base station or repeater in a wired or wireless manner and a service antenna so that two or more different independent paths can be formed in one cable. Also, according to an embodiment of the present invention, no backward path exists in the MIMO paths so that a manufacturing cost of the relay apparatus can be reduced.

FIG. 3

**Description**

TECHNICAL FIELD

The present invention relates to a multiple input multiple output (MIMO) relay apparatus for effectively relaying MIMO signals applied to a multiple access type wireless communication system, such as a long term evolution (LTE) communication system.

BACKGROUND ART

Wireless communication systems are widely developed to provide various types of communication contents, such as voice and data. These systems may be multiple access systems that are capable of supporting communication with many users by sharing available system resources, for example, band widths or transmission power. Examples of the multiple access systems include code division multiple access (CDMA) systems, time division multiple access (TDMA) systems, frequency division multiple access (FDMA) systems, 3GPP long term evolution (LTE) systems, and orthogonal frequency division multiple access (OFDMA) systems.
In general, a wireless multiple access communication system can support communications with a plurality of wireless terminals simultaneously. Each of the plurality of wireless terminals communicates with one or more base stations through transmission in a forward link and a backward link. The forward link (or referred to as a downlink or downward link) refers to a communication link from the base stations to terminals, and the backward link (or referred to as an uplink or upward link) refers to a communication link from the terminals to the base stations. These communication links may be set using a single input single output (SISO) method, a multiple input single output (MISO) method, or a multiple input multiple output (MIMO) method.
Systems using the MIMO method use a plurality of (NT) transmission antennas and a plurality of (NR) receiving antennas so as to perform data transmission. MIMO channels formed by NT transmission antennas and NR receiving antennas may be divided into NS independent channels. These NS independent channels may be called spatial channels. Each of the NS independent channels corresponds to a dimension. When additional dimensions generated by a plurality of transmission and receiving antennas are used, the MIMO systems may provide improved performance, for example, higher throughput and/or higher reliability.
Meanwhile, in the MIMO communication method, a relay apparatus needs to be configured in an area which covers a propagation shadow region or installation cost for base stations of which is uncomfortable.
However, a general relay apparatus of the related art includes one receiving antenna that receives signals transmitted from a base station and one re-transmission antenna directed toward a service zone with respect to downward signals that transmit communication signals from the base station to a user terminal so that the received signals can be amplified and re-transmitted. When the relay apparatus according to the related art is applied to the MIMO communication system and relays MIMO signals in the forward link, the user terminal cannot restore signals with an MIMO communication method. The same phenomenon occurs even in the backward link in which signals are transmitted from the user terminal to the base state.
Also, a plurality of transmission cables corresponding to the number of MIMO antennas are required to extend to a predetermined distance of the MIMO signals or to transmit the MIMO signals from the base station or the repeater to a plurality of antennas. Due to installation of the plurality of transmission cables, a cable purchasing cost, a working time, and manpower are increased such that a facility cost increases remarkably and there are many limitations in an installation space.

DETAILED DESCRIPTION OF THE INVENTION

TECHNICAL PROBLEM

The present invention provides a multiple input multiple output (MIMO) relay apparatus in which MIMO signals applied to a multiple access type wireless communication system, such as a long term evolution (LTE) communication system, can be effectively relayed without any distortion and the MIMO signals can be transmitted by Fextending to a predetermined distance to a plurality of service antennas using one cable.

TECHNICAL SOLUTION

According to an aspect of the present invention, there is provided a multiple input multiple output (MIMO) relay apparatus including: a first relay apparatus including a plurality of first input/output terminals installed to correspond to an independent MIMO path with a base station or repeater, a first cable terminal to which one end of a single coaxial cable is connected, a plurality of first signal separation units that are respectively connected to the plurality of first input/output terminals and separate an upward signal and a downward signal from each other, a second signal separation unit that is connected to the first cable terminal and separates the upward signal and the downward signal from each other, a first upward signal amplification unit and a first downward signal amplification unit that are respectively connected between at least one of the plurality of first signal separation units and the second signal separation unit, and a second downward signal amplification unit that is connected between at least the other one of the plurality of first signal separation units and the second signal separation unit; and a second relay apparatus including a second cable terminal to which the other end of the single coaxial cable is connected, a plurality of second input/output terminals installed to correspond to an independent MIMO path with a user terminal, a third signal separation unit that is connected to the second cable terminal and separates an upward signal and a downward signal from each other, a bypass line that connects the third signal separation unit and at least one of the plurality of second input/output terminals, and a third downward signal amplification unit that is connected between the third signal separation unit and at least the other one of the plurality of second input/output terminals, wherein each the first upward signal amplification unit and the first downward signal amplification unit includes a first part in which frequency down converters, a filter and an amplifier are sequentially connected in series, and a second part in which frequency up converters, a filter, an amplifier, a variable attenuator and a power amplifier are sequentially connected in series, and is configured of a super heterodyne amplifier in which the first part and the second part are connected in series, and the second downward signal amplification unit is configured to be the same as the first part of the super heterodyne amplifier, and the third downward signal amplification unit is configured to be the same as the second part of the super heterodyne amplifier.

The MIMO relay apparatus may further include an upward signal division unit that divides the upward signal output from the first upward signal amplification unit into a plurality of signals and inputs the divided signals to the plurality of first signal separation units, respectively.

The MIMO relay apparatus may further include an output adjustment unit that adjusts an output level of a second downward signal output from the third downward signal amplification unit based on a first downward signal transmitted via the bypass line. The output adjustment unit may include a first detection unit that detects the first downward signal transmitted via the bypass line, a second detection unit that detects the second downward signal output from the third downward signal amplification unit, and a controller that adjusts an output level of the second downward signal by controlling a variable attenuator of the third downward signal amplification unit based on the detected, first downward signal.

The plurality of first input/output terminals may connect a plurality of donor antennas, respectively, or may respectively connect a plurality of cables connected to the base station or repeater, or may respectively connect a plurality of service antennas.

According to another aspect of the present invention, there is provided a multiple input multiple output (MIMO) relay apparatus including: a first relay apparatus including a plurality of first input/output terminals installed to correspond to an independent MIMO path with a base station or repeater, a first cable terminal to which one end of a single coaxial cable is connected, a first signal separation unit that is connected to at least one of the plurality of first input/output terminals and separates an upward signal and a downward signal from each other, a second signal separation unit that is connected to the first cable terminal and separates the upward signal and the downward signal from each other, a first bypass line that connects at least the other one of the plurality of first input/output terminals and the second signal separation unit, and a first downward signal amplification unit that is connected between the first signal separation unit and the second signal separation unit; and a second relay apparatus including a second cable terminal to which the other end of the single coaxial cable is connected, a plurality of second input/output terminals installed to correspond to an independent MIMO path with a user terminal, a third signal separation unit that is connected to the second cable terminal and separates an upward signal and a downward signal from each other, a second bypass line that connects the third signal separation unit and at least one of the plurality of second input/output terminals, and a second downward signal amplification unit that is connected between the third signal separation unit and at least the other one of the plurality of second input/output terminals, wherein, in a super heterodyne amplifier including a first part in which frequency down converters, a filter and an amplifier are sequentially connected in series, and a second part in which frequency up converters, a filter, an amplifier, a variable attenuator and a power amplifier are sequentially connected in series, the first downward signal amplification unit is configured of the first part of the super heterodyne amplifier, and the second downward signal amplification unit is configured of the second part of the super heterodyne amplifier.

The MIMO relay apparatus may further include at least one of an upward signal division unit that divides the upward signal transmitted via the first bypass line and inputs the divided signals to the first signal separation unit, and an output adjustment unit that adjusts an output level of a second downward signal output from the second downward signal amplification unit based on a first downward signal transmitted via the second bypass line.

The output adjustment unit may include a first detection unit that detects the first downward signal transmitted via the second bypass line, a second detection unit that detects the second downward signal output from the second downward signal amplification unit, and a controller that adjusts an output level of the second downward signal by controlling a variable attenuator of the second downward signal amplification unit based on the detected, first downward signal.

The plurality of first input/output terminals may connect a plurality of donor antennas, respectively, or may respectively connect a plurality of cables connected to the base station or repeater, or may respectively connect a plurality of service antennas.

DESCRIPTION OF THE DRAWINGS

FIG. 1 illustrates a transmission/receiving system of multiple input multiple output (MIMO) signals in a multiple access type wireless communication system;
FIG. 2 is a view of a wireless relay apparatus according to the related art;
FIG. 3 is a view of a configuration of an MIMO relay apparatus according to an embodiment of the present invention;
FIG. 4 is a view of a detailed configuration of a first downward signal amplification unit of FIG. 3;
FIG. 5 is a view of a detailed configuration of a first upward signal amplification unit of FIG. 3;
FIG. 6 is a view of a detailed configuration of a second downward signal amplification unit of FIG. 3;
FIG. 7 is a view of a detailed configuration of a third downward signal amplification unit of FIG. 3;
FIG. 8 is a view of a configuration of an MIMO relay apparatus according to another embodiment of the present invention;
FIG. 9 is a view of a detailed configuration of a first downward signal amplification unit of FIG. 8; and
FIG. 10 is a view of a detailed configuration of a second downward signal amplification unit of FIG. 8.

MODE OF THE INVENTION

Hereinafter, the present invention will be described in detail by explaining exemplary embodiments of the invention with reference to the attached drawings.

A phenomenon caused by one or more reflected waves in a period of wireless signal transmission is a main cause for lowering receiving performance of a communication system. Frequency efficiency may be improved by using this multiple reflected wave phenomenon. This technique method is a multiple input multiple output (MIMO) system. MIMO is a technique, whereby, as known from the name, a plurality of antennas are used in both a transmission side and a receiving side so that performance improvements, such as transmission speed, a capacity increase, and a coverage increase, are achieved.

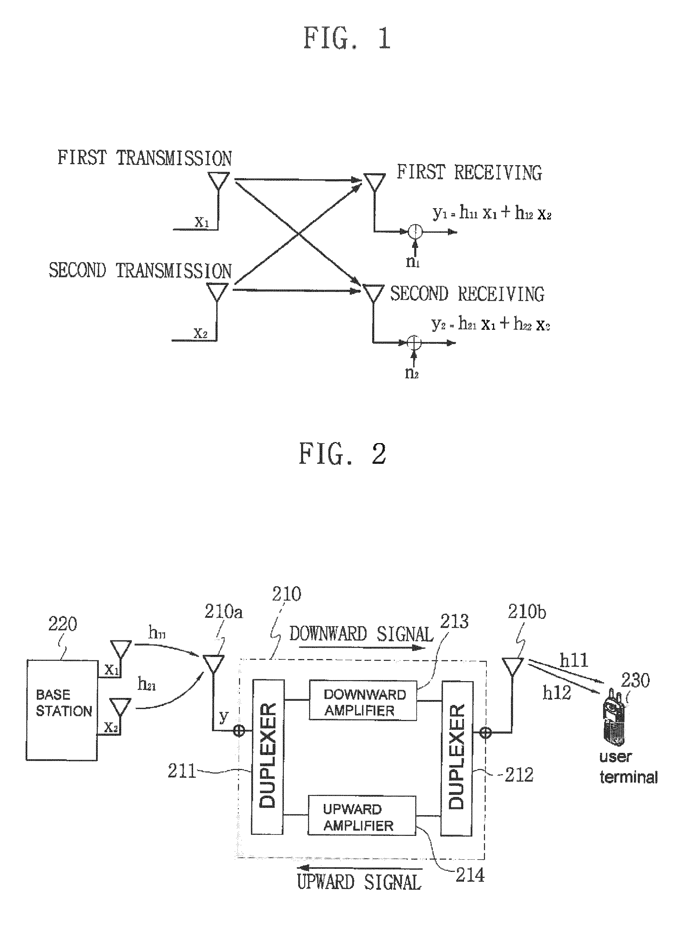

As a simple example, when, in a 2 X 2 system in which two antennas are present in a transmission side and two antennas are present in a receiving side, as illustrated in FIG. 1, when characteristics of a channel between a first transmission antenna and a first receiving antenna are $h_{11}$, characteristics of a channel between a second transmission antenna and the first receiving antenna are $h_{12}$, characteristics of a channel between the first transmission antenna and a second receiving antenna are $h_{21}$, characteristics of a channel between the second transmission antenna and the second receiving antenna are $h_{22}$ and channel characteristics in this case are gathered, a channel matrix shown in Equation 1 is made.

[Equation 1]

$$\mathbf{y} = \mathbf{H} \cdot \mathbf{x} + \mathbf{n}$$

$$\begin{bmatrix} y_1 \\ y_2 \end{bmatrix} = \begin{bmatrix} h_{11} & h_{12} \\ h_{21} & h_{22} \end{bmatrix} \cdot \begin{bmatrix} x_1 \\ x_2 \end{bmatrix} + \begin{bmatrix} n_1 \\ n_2 \end{bmatrix}$$

$x_1$, $x_2$ : transmission signal
$y_1$, $y_2$ : received signal
$n_1$, $n_2$ : channel noise

In this case, $x_1$ and $x_2$ are transmission signals transmitted from the first and second transmission antennas, respectively, and $n_1$ and $n_2$ are noises that exist in the first and second receiving antennas, and $y_1$ and $y_2$ are received signals.

Two examples shown in the following Equations 2 and 3 are made based on the above basic equation.

[Equation 2]

$$\begin{bmatrix} 6 \\ 12 \end{bmatrix} = \begin{bmatrix} 1 & 2 \\ 2 & 4 \end{bmatrix}\begin{bmatrix} x1 \\ x2 \end{bmatrix}$$

[Equation 3]

$$\begin{bmatrix} 6 \\ 12 \end{bmatrix} = \begin{bmatrix} 3 & -2 \\ 2 & 4 \end{bmatrix}\begin{bmatrix} x1 \\ x2 \end{bmatrix}$$

An example of a matrix of Equation 2 is analyzed as $6=1x_1+2x_2$ and $12=2x_1+4x_2$, two formulae are the same formula in which information quantity is one. On the other hand, in a matrix of Equation 3, two formulae are different from each other. Thus, values of different transmission signals $x_1$ and $x_2$ can be obtained by solving the matrix or simultaneous equations. In linear algebra, a rank of a 2 X 2 matrix of Equation 2 is referred to as 1, and a rank of the matrix of Equation 3 is referred to as 2.

In the following Equation 4, a system configured of two transmission antennas and two receiving antennas, having a 2 x 2 channel matrix and maintaining the condition of rank 2 shows a basic format in which transmission signals are extracted from signals received from each antenna by applying an inverse matrix of the channel matrix.

[Equation 4]

$$\begin{bmatrix} \tilde{x}_1 \\ \tilde{x}_2 \end{bmatrix} = H^{-1}\begin{bmatrix} y'_1 \\ y'_2 \end{bmatrix}$$

In Equations 1 and 4, $\tilde{x}_1$ and $\tilde{x}_2$ are values obtained by demodulating signals estimated to be transmitted to each antenna.

Such an MIMO method is referred to as an MIMO spatial multiplexing method, and the number of different data streams that can be simultaneously transmitted, is limited to a smaller number between the number M of transmission antennas and the number N of receiving antennas, and general MIMO has a structure in which the number of transmission antennas and the number of receiving antennas are the same.

FIG. 2 is a view for describing a relay apparatus according to the related art. As illustrated in FIG. 2, a wireless relay apparatus 210 according to the related art is configured to have access to one receiving antenna 210a that receives signals transmitted from the base station 220 and one re-transmission antenna 210b directed toward a service zone, i.e., the user terminal 230, with respect to downward MIMO signals that transmit MIMO communication signals from a base station 220 having two transmission/receiving antennas to a user terminal 230 having two transmission/receiving antennas and to amplify the received signals by using a downward signal amplification unit 213 and to re-transmit the amplified signals.

In this case, the number of antennas connected to each other in a link between the base station and the relay apparatus is 2 and 1, respectively, i.e., 2x1, and the number of antennas connected to each other in a link between the relay apparatus and a terminal is 1 and 2, respectively, i.e., 1x2 so that transmission and restoration of the MIMO signals are not possible. This phenomenon also occurs in a case where an upward signal that transmits a signal from the user terminal 230 to the base station 220 is an MIMO signal.

In FIG. 2, reference numerals 211 and 212 are duplexers for separating an upward signal and a downward signal, and reference numeral 214 is an upward signal amplification unit.

As described above, a basic principle of MIMO is that different pieces of data are transmitted to the terminal through two or more different paths (including antennas) from the base station or repeater by using spatial reflected wave signals so that transmission efficiency can be increased in the same frequency within the same time. Two or more unmixed paths need to be formed so that two or more MIMO signals are transmitted from the base station or repeater to two or more service antennas and the effect of MIMO is achieved between service antennas and the terminal. To this end, when two or more cables are installed, an installation cost thereof increases greatly.

According to an embodiment of the present invention, as shown in Equation 1, a transmission channel matrix between service antennas and the terminal is made as 2 X 2, MIMO signals of the base station or repeater are transmitted to the service antennas by using one cable, and two or more transceivers (or referred to as downward/upward signal amplification units) are disposed in the relay apparatus so as to form two or more paths in one cable, and a frequency down part and a frequency up part of at least one transceiver between two or more transceivers are separated from each other and are implemented at a donor connected to the base station or repeater in a wired or wireless manner and a service antenna so that two or more different independent paths can be formed in one cable. Also, according to an embodiment of the present invention, no backward path exists in the MIMO paths so that a manufacturing cost of the relay apparatus can also be reduced.

As a result, according to an embodiment of the present invention, two independent channels that are fully separated from each other are formed between the donor connected to the base station or repeater for MIMO communication in the wired or wireless manner and the service antenna so that complete spatial MIMO signals can be relayed. A description of a detailed embodiment thereof will be provided below.

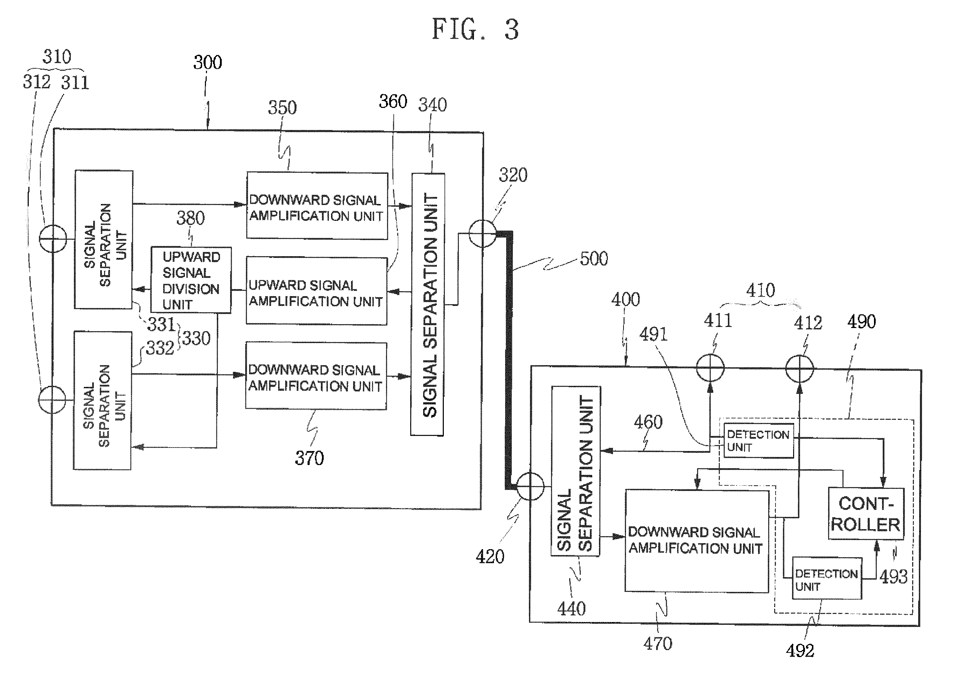

FIG. 3 is a view of a configuration of an MIMO relay apparatus according to an embodiment of the present invention. As illustrated in FIG. 3, the MIMO relay apparatus may include a first relay apparatus 300 and a second relay apparatus 400 that are connected to each other via a single coaxial cable 500. The first relay apparatus 300 may include a first input/output terminal 310, a first cable terminal 320, a first signal separation unit 330, a second signal separation unit 340, a first downward signal amplification unit 350, a first upward signal amplification unit 360, a second downward signal amplification unit 370, and an upward signal division unit 380. The second relay apparatus 400 may include a second input/output terminal 410, a second cable terminal 420, a third signal separation unit 440, a bypass line 460, a third downward signal amplification unit 470, and an output adjustment unit 490.

A downward signal or an upward signal in the description of FIG. 3 may be a signal including an MIMO method. In the present embodiment, a case where the downward signal is a signal with the MIMO method and the upward signal is a signal with a method different from the MIMO method, will be described.

First, the configuration of the first relay apparatus 300 according to the embodiment of FIG. 3 will be described.

The first input/output terminal 310 are a plurality of terminals installed at one side of the first relay apparatus 300 so as to correspond to the number of independent MIMO paths, for example, the number of antennas of the base station or repeater that face each other) with the base station or repeater. For example, when the number of antennas of the base station or repeater is 2, the first input/output terminal 310 may include two input/output terminals 311 and 312, and a donor antenna (not shown), for example, and a cable (not shown) connected to an output of the base station or repeater, as another example, may be connected to each of the input/output terminals 311 and 312.

The first cable terminal 320 according to the present embodiment is a single terminal installed at one side of the first relay apparatus 300 so that one end of the single coaxial cable 500 may be connected to the first cable terminal 320.

The first signal separation unit 330 is used to separate the upward signal and the downward signal from each other according to frequency. For example, the first signal separation unit 330 may include two signal separation units 331 and 332 connected to two input/output terminals 311 and 312, respectively, and each of the signal separation units 331 and 332 may be configured of a duplexer, and the signal separation unit 332 may be configured of a downward band filter when the MIMO relay apparatus does not include the upward signal division unit 380, for example, as needed.

The second signal separation unit 340 is connected to the first cable terminal 320 and is used to separate the upward signal and the downward signal that are input/output through the first cable terminal 320 from each other according to frequency.

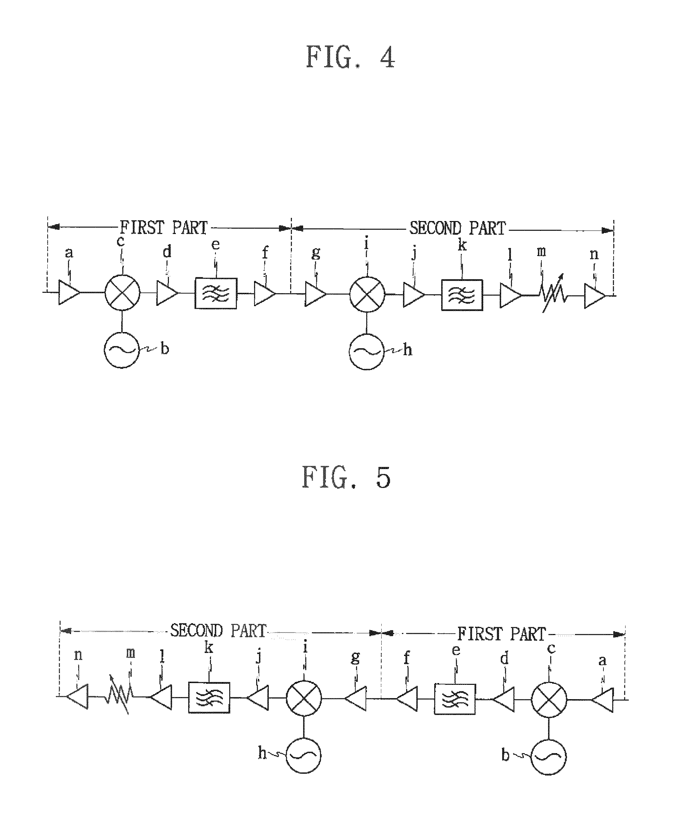

The first downward signal amplification unit 350 is connected between one 331 of the first signal separation units 331 and 332 and the second signal separation unit 340 and is used to form a first forward amplification path. For example, as illustrated in FIG. 4, the first downward signal amplification unit 350 may be configured of a traditional super heterodyne amplifier in which an amplifier **a,** forward down converters **b** and c including a local oscillator b and a mixer c, an amplifier d, a filter e, amplifiers f and g, forward up converters h and i including a local oscillator h and a mixer i, an amplifier j, a filter k, an amplifier l, a variable attenuator **m,** and a power amplifier **n** are sequentially connected in series.

The first upward signal amplification unit 360 is connected between one 331 of the first signal separation units 331 and 332 and the second signal separation unit 340 and is used to form a first backward amplification path. For example, as illustrated in FIG. 5, the first upward signal amplification unit 360 may be configured of a traditional super heterodyne amplifier in which an amplifier **a,** backward down converters **b** and **c** including a local oscillator **b** and a mixer

**c,** an amplifier **d,** a filter **e,** amplifiers **f** and **g,** backward up converters **h** and **i** including a local oscillator **h** and a mixer **i,** an amplifier j, a filter **k**, an amplifier **l**, a variable attenuator **m,** and a power amplifier **n** are sequentially connected in series.

For convenience of explanation, the configurations **a** through **f** of the super heterodyne amplifiers of FIGS. 4 and 5 described above are referred to as a first part, and the configurations **g** through **n** of the super heterodyne amplifiers of FIGS. 4 and 5 are referred to as a second part.

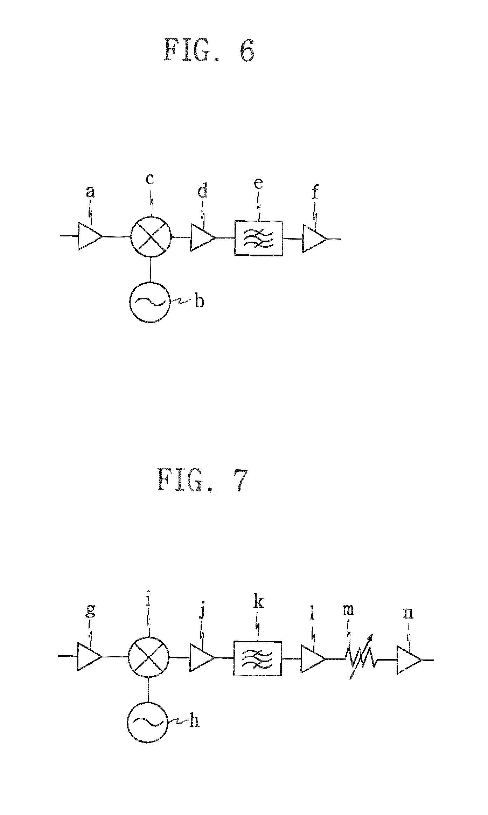

The second downward signal amplification unit 370 is connected to the other one 332 of the first signal separation units 331 and 332 and the second signal separation unit 340 and is used to form a second forward amplification path. For example, as illustrated in FIG. 6, the second downward signal amplification unit 370 may be configured of the first part (see **a** through **f** of FIG. 4) of a traditional super heterodyne amplifier in which an amplifier **a,** forward down converters **b** and c including a local oscillator b and a mixer **c,** an amplifier **d,** a filter **e,** and an amplifier **f** are sequentially connected in series.

The upward signal division unit 380 is used to divide the upward signal output from the first upward signal amplification unit 360 into a plurality of signals and to input the plurality of signals to a plurality of first signal separation units 331 and 332 and may be optionally configured in the embodiment of FIG. 3.

Next, the configuration of the second relay apparatus 400 according to the embodiment of FIG. 3 will be described.

The second input/output terminal 410 are a plurality of terminals installed at one side of the second relay apparatus 400 so as to correspond to the number of independent MIMO paths, for example, the number of antennas of the user terminal that face each other, with the user terminal. For example, when the number of user terminals is 2, the second input/output terminal 410 may include two input/output terminals 411 and 412, and a service antenna (not shown), for example, may be connected to each of the input/output terminals 411 and 412.

The second cable terminal 420 according to the present embodiment is a single terminal installed at one side of the second relay apparatus 400 so that one end of the single coaxial cable 500 may be connected to the second cable terminal 420.

The third signal separation unit 440 is connected to the second cable terminal 420 and is used to separate the upward signal and the downward signal input/output through the second cable terminal 420 from each other according to frequency.

The bypass line 460 is used to connect the third signal separation unit 440 and one 411 of the plurality of second input/output terminals 411 and 412 and to bypass the upward signal and the downward signal without any change without performing signal processing.

The third downward signal amplification unit 470 is connected between the third signal separation unit 440 and the other one 412 of the plurality of second input/output terminals 411 and 412 and is used to form a forward amplification path. For example, as illustrated in FIG. 7, the third downward signal amplification unit 470 may be configured of the second part (see **g** through **n** of FIG. 4) of a traditional super heterodyne amplifier in which an amplifier **g,** forward up converters **h and i** including a local oscillator **h** and a mixer **i,** an amplifier **j,** a filter **k,** an amplifier l, a variable attenuator **m,** and a power amplifier are sequentially connected in series.

The output adjustment unit 490 that is used to adjust an output level of a second upward signal output from the third downward signal amplification unit 470 based on a first downward signal transmitted via the bypass line 460, may include a first detection unit 491 that detects the first downward signal transmitted via the bypass line 460, a second detection unit 492 that detects the second downward signal output from the third downward signal amplification unit 470, and a controller 493 that adjusts the output level of the second downward signal by controlling the variable attenuator **m** of the third downward signal amplification unit 470 based on the detected, first downward signal.

The operation of the MIMO relay apparatus according to the embodiment of FIG. 3 will be described using a forward path and a backward path divided.

First, the forward path of the MIMO relay apparatus of FIG. 3 will be described.

One (hereinafter, referred to as a first high frequency downward signal) of two high frequency downward signals from the base station or repeater that are input through two input/output terminals 311 and 312 of the first relay apparatus 300 is input to the downward signal amplification unit 350 through the signal separation unit 331, and the downward signal amplification unit 350 frequency-downs the input, first high frequency downward signal into an intermediate frequency (see **a** through **d** of FIG. 4), increases selectivity using a filter (see e and f of FIG. 4) and then frequency-ups the first high frequency downward signal into a high frequency signal and amplifies the frequency signal (see **g** through n of FIG. 4) and outputs the amplified signal, and the other one (hereinafter, referred to as a second high frequency downward signal) of two high frequency downward signals is input to the downward signal amplification unit 370 through the signal separation unit 332, and the downward signal amplification unit 370 frequency-downs the input, second high frequency downward signal into an intermediate frequency (see **a** through **d** of FIG. 6), increases selectivity using a filter and then amplifies the second high frequency downward signal (see **e** and f of FIG. 6) and outputs the amplified signal. The first high frequency downward signal output from the downward signal amplification unit 350 and the intermediate frequency downward signal output from the downward signal amplification unit 370 are output in a forward direction through the signal separation unit 340, and the first high frequency downward signal and the intermediate frequency downward signal output from the signal separation unit 340 are output through the single cable terminal 320, extend to a predetermined distance using the single coaxial cable 500 and are transmitted to the second relay apparatus 400.

The first high frequency downward signal and the intermediate frequency downward signal input through the single cable terminal 420 of the second relay apparatus 400 are input to the signal separation unit 440, and the signal separation unit 440 separates the input, first high frequency downward signal and the intermediate frequency downward signal from each other and outputs the first high frequency downward signal and the intermediate frequency downward signal to the bypass line 460 and the downward signal amplification unit 470, respectively. The downward signal amplification unit 470 frequency-ups the input intermediate frequency downward signal, restores the intermediate frequency downward signal into the second high frequency downward signal and then outputs the restored signal (see **g** through n of FIG. 7).

The first high frequency downward signal via the bypass line 460 and the second high frequency downward signal output from the downward signal amplification unit 470 are radiated and output to the outside via two service antennas (not shown) connected to two input/output terminals 411 and 412 of the second relay apparatus 400. In this case, the output adjustment unit 490 adjusts the output level of the second high frequency downward signal output from the downward amplification unit 470 according to the first high frequency downward signal transmitted via the bypass line 460.

Next, the backward path of the MIMO relay apparatus of FIG. 3 will be described.

A backward, high frequency upward signal from the user terminal (not shown) input through one 411 of two input/output terminals 411 and 412 of the second relay apparatus 400 is input to the signal separation unit 440 via the bypass line 460 and is output in a backward direction, and the high frequency upward signal output from the signal separation unit 440 is output through the single cable terminal 420, extends to a predetermined distance through the single coaxial cable 500 and is transmitted to the first relay apparatus 300.

The high frequency upward signal input through the single cable terminal 320 of the first relay apparatus 300 is input to the signal separation unit 340, and the signal separation unit 340 separates the input high frequency upward signal and outputs the separated signals to the single upward signal amplification unit 360. The upward signal amplification unit 360 frequency-downs the input high frequency upward signal into the intermediate frequency (see **a** through **d** of FIG. 5), increases selectivity using a filter (see **e** through **f** of FIG. 5), frequency-ups the signal into a high frequency signal, amplifies the high frequency signal (see **g** through **n** of FIG. 5), and outputs the amplified signal.

The high frequency upward signal output from the upward signal amplification unit 360 is input to the upward signal division unit 380, and the upward signal division unit 380 divides the input, one high frequency upward signal into two high frequency upward signals and transmits the divided, two high frequency upward signals to two signal separation units 331 and 332. Two signal separation units 331 and 332 output the input, two high frequency upward signals in a backward direction using two input/output terminals 311 and 312, and two high frequency upward signals output through two input/output terminals 311 and 312 of the first relay apparatus 300 are transmitted to the base station or repeater via two donor antennas or a cable.

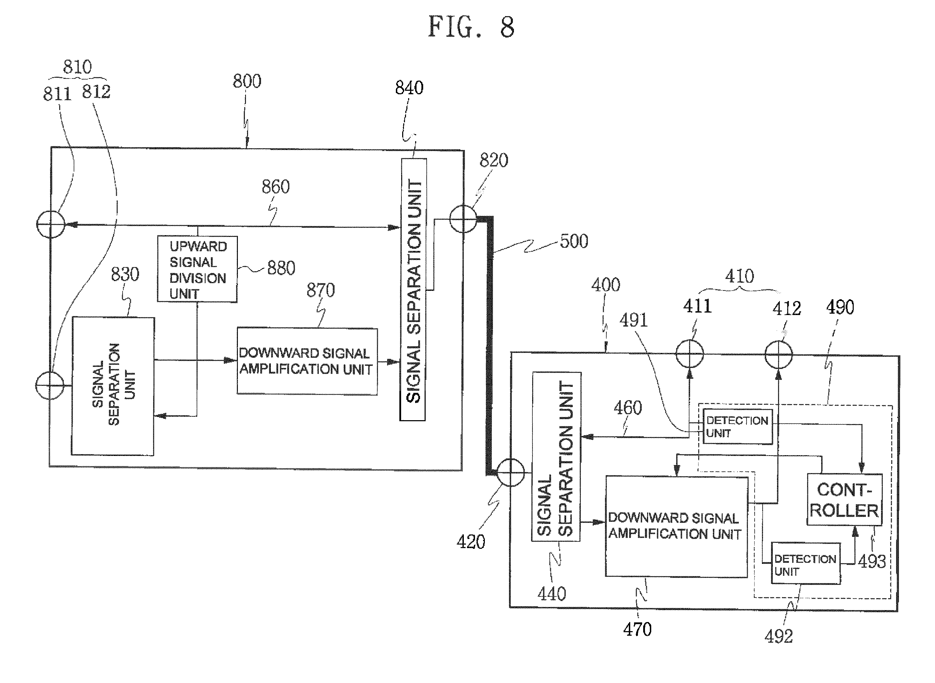

FIG. 8 is a view of a configuration of an MIMO relay apparatus according to another embodiment of the present invention. As illustrated in FIG. 8, the MIMO relay apparatus may include a first relay apparatus 800 and a second relay apparatus 400 that are connected to each other via a single coaxial cable 500. The first relay apparatus 800 may include a first input/output terminal 810, a first cable terminal 820, a first signal separation unit 830, a second signal separation unit 840, a first bypass line 860, and a first downward signal amplification unit 870. The second relay apparatus 400 may include a second input/output terminal 410, a second cable terminal 420, a third signal separation unit 440, a second bypass line 460, a second downward signal amplification unit 470, and an output adjustment unit 490.

In the description of FIG. 8, a downward signal or an upward signal may be a signal including an MIMO method, and in the present embodiment, a case where the downward signal is an MIMO signal and the upward signal is a signal with a method different from the MIMO method, will be described.

First, the configuration of the first relay apparatus 800 according to the embodiment of FIG. 8 will be described.

The first input/output terminal 810 are a plurality of terminals installed at one side of the first relay apparatus 800 so as to correspond to the number of independent MIMO paths, for example, the number of antennas of the base station or repeater, with the base station or repeater. For example, when the number of antennas of the base station or repeater is 2, the first input/output terminal 810 may include two input/output terminals 811 and 812, and a donor antenna (not shown), for example, or a cable (not shown) connected to an output of the base station or repeater, as another example, may be connected to each of the input/output terminals 811 and 812.

The first cable terminal 820 according to the present embodiment is a single terminal installed at one side of the first relay apparatus 800 so that one end of the single coaxial cable 500 may be connected to the first cable terminal 820.

The first signal separation unit 830 is used to separate the upward signal and the downward signal from each other according to frequency. For example, the first signal separation unit 830 may be connected to one 812 of two input/output terminals 811 and 812 described above and may be configured of a duplexer or a downward band filter.

The second signal separation unit 840 is connected to the first cable terminal 820 and is used to separate the upward signal and the downward signal input/output through the first cable terminal 820 from each other according to frequency.

The first bypass line 860 is used to connect one 811 of two input/output terminals 811 and 812 described above and the above-described second signal separation unit 840 and to bypass the upward signal and the downward signal without any change without performing signal processing.

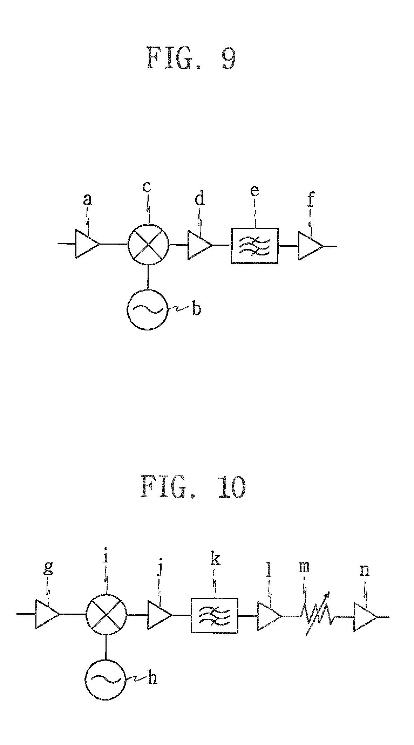

The first downward signal amplification unit 870 is connected between the first signal separation unit 830 and the second signal separation unit 840 and is used to form a forward amplification path. For example, as illustrated in FIG. 9, the first downward signal amplification unit 870 may be configured of the first part (see FIG. 4) of a traditional super heterodyne amplifier in which an amplifier **a,** forward down converters **b** and **c** including a local oscillator **b** and a mixer **c,** an amplifier **d,** a filter e, and an amplifier **f** are sequentially connected in series.

The upward signal division unit 880 is used to divide the upward signal transmitted via the first bypass line 860 and to input the divided upward signal to the first signal separation unit 830. In the embodiment of FIG. 8, the MIMO relay apparatus may optionally include the upward signal division unit 880. When, in the embodiment of FIG. 8, the MIMO relay apparatus does not include the upward signal division unit 880, the first signal separation unit 830 may be configured of an upward band filter.

Next, the configuration of the second relay apparatus 400 according to the embodiment of FIG. 8 will be described.

The second input/output terminal 410 are a plurality of terminals installed at one side of the second relay apparatus 400 so as to correspond to the number of independent MIMO paths, for example, the number of antennas of the user terminal, with the user terminal. For example, when the number of user terminals is 2, the second input/output terminal 410 may include two input/output terminals 411 and 412, and a service antenna (not shown), for example, may be connected to each of the input/output terminals 411 and 412.

The second cable terminal 420 according to the present embodiment is a single terminal installed at one side of the second relay apparatus 400 so that one end of the single coaxial cable 500 may be connected to the second cable terminal 420.

The third signal separation unit 440 is connected to the second cable terminal 420 and is used to separate the upward signal and the downward signal input/output through the second cable terminal 420 from each other according to frequency.

The bypass line 460 is used to connect the third signal separation unit 440 and one 411 of the plurality of second input/output terminals 411 and 412 and to bypass the upward signal and the downward signal without any change without performing signal processing.

The second downward signal amplification unit 470 is connected between the third signal separation unit 440 and the other one 412 of the plurality of second input/output terminals 411 and 412 and is used to form a forward amplification path. For example, as illustrated in FIG. 10, the third downward signal amplification unit 470 may be configured of the second part (see FIG. 4) of a traditional super heterodyne amplifier in which an amplifier **g,** forward up converters **h** and **i** including a local oscillator **h** and a mixer **i,** an amplifier **j,** a filter **k,** an amplifier **l,** a variable attenuator **m,** and a power amplifier **n** are sequentially connected in series.

The output adjustment unit 490 that is used to adjust an output level of a second upward signal output from the third downward signal amplification unit 470 based on a first downward signal transmitted via the bypass line 460, may include a first detection unit 491 that detects the first downward signal transmitted via the bypass line 460, a second detection unit 492 that detects the second downward signal output from the second downward signal amplification unit 470, and a controller 493 that adjusts the output level of the second downward signal by controlling the variable attenuator m of the second downward signal amplification unit 470 based on the detected first downward signal.

The operation of the MIMO relay apparatus according to the embodiment of FIG. 8 will be described using a forward path and a backward path divided.

First, the forward path of the MIMO relay apparatus of FIG. 8 will be described.

One (hereinafter, referred to as a first high frequency downward signal) of two high frequency downward signals from the base station or repeater that are input through two input/output terminals 811 and 812 of the first relay apparatus 800 is input to the signal separation unit 840 via the bypass line 860, and the other one (hereinafter, referred to as a second high frequency downward signal) of two high frequency downward signals is input to the downward signal amplification unit 870 using the signal separation unit 830, and the downward signal amplification unit 870 frequency-downs the input, second high frequency downward signal into an intermediate frequency (see **a** through **d** of FIG. 9), increases selectivity using a filter and then amplifies the second high frequency downward signal (see **e** and **f** of FIG. 9) and outputs the amplified signal. The first high frequency downward signal transmitted via the bypass line 860 and the intermediate frequency downward signal output from the downward signal amplification unit 870 are output in a forward direction through the signal separation unit 840, and the first high frequency downward signal and the intermediate frequency downward signal output from the signal separation unit 840 are output through the single cable terminal 820, extend to a predetermined distance using the single coaxial cable 500 and are transmitted to the second relay apparatus 400.

The first high frequency downward signal and the intermediate frequency downward signal input through the single cable terminal 420 of the second relay apparatus 400 are input to the signal separation unit 440, and the signal separation unit 440 separates the input, first high frequency downward signal and the intermediate frequency downward signal from each other and outputs the first high frequency downward signal and the intermediate frequency downward signal to the bypass line 460 and the downward signal amplification unit 470, respectively. The downward signal amplification unit 470 frequency-ups the input intermediate frequency downward signal, restores the intermediate frequency downward signal into the second high frequency downward signal and then outputs the restored signal (see **g** through **n** of FIG. 10).

The first high frequency downward signal via the bypass line 460 and the second high frequency downward signal output from the downward signal amplification unit 470 are radiated and output to the outside via two service antennas (not shown) connected to two input/output terminals 411 and 412 of the second relay apparatus 400. In this case, the output adjustment unit 490 adjusts the output level of the second high frequency downward signal output from the downward amplification unit 470 according to the first high frequency downward signal transmitted via the bypass line 460.

Next, the backward path of the MIMO relay apparatus of FIG. 8 will be described.

A backward, a high frequency upward signal from the user terminal (not shown) input through one 411 of two input/output terminals 411 and 412 of the second relay apparatus 400 is input to the signal separation unit 440 via the bypass line 460 and is output in a backward direction, and the high frequency upward signal output from the signal separation unit 440 is output through the single cable terminal 420, extends to a predetermined distance through the single coaxial cable 500 and is transmitted to the first relay apparatus 800.

The high frequency upward signal input through the single cable terminal 820 of the first relay apparatus 800 is input to the signal separation unit 840, and the signal separation unit 840 separates the input high frequency upward signal and transmits the separated signals to one 811 of two input/output terminals 811 and 812 via the single bypass line 860. In this case, the upward signal division unit 880 divides one high frequency upward signal transmitted via the bypass line 860 and transmits the divided signals to the signal separation unit 830. The signal separation unit 830 outputs the input, high frequency upward signal to the other one 812 of two input/output terminals 811 and 812 in a backward direction, and two high frequency upward signals output through two input/output terminals 811 and 812 of the first relay apparatus 800 are transmitted to the base station or repeater via two donor antennas or a cable.

While the present invention has been particularly shown and described with reference to exemplary embodiments thereof, it will be understood by those of ordinary skill in the art that various changes in form and details may be made therein without departing from the spirit and scope of the present invention as defined by the following claims.

INDUSTRIAL APPLICABILITY

As described above, according to the present invention, multiple input multiple output (MIMO) signals applied to a multiple access type wireless communication system, such as a long term evolution (LTE) communication system, can be effectively relayed without any distortion.

In addition, when the MIMO signals extend to a predetermined distance or are transmitted from a base station or repeater to a plurality of antennas, a plurality of transmission cables corresponding to the number of MIMO antennas can be commonly used as one transmission cable so that a facility cost of the relay apparatus can be remarkably reduced.

Furthermore, one relay path of an upward signal in the relay apparatus is formed so that, even when a backward signal is not an MIMO signal, a manufacturing cost of the relay apparatus can be remarkably reduced while the signal is effectively relayed.

**Claims**

1. A multiple input multiple output (MIMO) relay apparatus comprising:

a first relay apparatus comprising a plurality of first input/output terminals installed to correspond to an independent MIMO path with a base station or repeater, a first cable terminal to which one end of a single coaxial cable is connected, a plurality of first signal separation units that are respectively connected to the plurality of first input/output terminals and separate an upward signal and a downward signal from each other, a second signal separation unit that is connected to the first cable terminal and separates the upward signal and the downward signal from each other, a first upward signal amplification unit and a first downward signal amplification unit that are respectively connected between at least one of the plurality of first signal separation units and the second signal separation unit, and a second downward signal amplification unit that is connected between at least the other one of the plurality of first signal separation units and the second signal separation unit; and a second relay apparatus comprising a second cable terminal to which the other end of the single coaxial cable is connected, a plurality of second input/output terminals installed to correspond to an independent MIMO path with a user terminal, a third signal separation unit that is connected to the second cable terminal and separates an upward signal and a downward signal from each other, a bypass line that connects the third signal separation unit and at least one of the plurality of second input/output terminals, and a third downward signal amplification unit that is connected between the third signal separation unit and at least the other one of the plurality of second input/output terminals,

wherein each the first upward signal amplification unit and the first downward signal amplification unit comprises a first part in which frequency down converters, a filter and an amplifier are sequentially connected in series, and a second part in which frequency up converters, a filter, an amplifier, a variable attenuator and a power amplifier are sequentially connected in series, and is configured of a super heterodyne amplifier in which the first part and the second part are connected in series, and

the second downward signal amplification unit is configured to be the same as the first part of the super heterodyne amplifier, and the third downward signal amplification unit is configured to be the same as the second part of the super heterodyne amplifier.

2. The MIMO relay apparatus of claim 1, further comprising an upward signal division unit that divides the upward signal output from the first upward signal amplification unit into a plurality of signals and inputs the divided signals to the plurality of first signal separation units, respectively.

3. The MIMO relay apparatus of claim 1, further comprising an output adjustment unit that adjusts an output level of a second downward signal output from the third downward signal amplification unit based on a first downward signal transmitted via the bypass line.

4. The MIMO relay apparatus of claim 3, wherein the output adjustment unit comprises a first detection unit that detects the first downward signal transmitted via the bypass line, a second detection unit that detects the second downward signal output from the third downward signal amplification unit, and a controller that adjusts an output level of the second downward signal by controlling a variable attenuator of the third downward signal amplification unit based on the detected, first downward signal.

5. The MIMO relay apparatus of claim 1, wherein the plurality of first input/output terminals connect a plurality of donor antennas, respectively.

6. The MIMO relay apparatus of claim 1, wherein the plurality of first input/output terminals respectively connect a plurality of cables connected to the base station or repeater.

7. The MIMO relay apparatus of claim 1, wherein the plurality of second input/output terminals respectively connect a plurality of service antennas.

8. The MIMO relay apparatus of claim 1, wherein at least one of the upward signal and the downward signal is an MIMO signal.

9. A multiple input multiple output (MIMO) relay apparatus comprising:

a first relay apparatus comprising a plurality of first input/output terminals installed to correspond to an independent MIMO path with a base station or repeater, a first cable terminal to which one end of a single coaxial cable is connected, a first signal separation unit that is connected to at least one of the plurality of first input/output terminals and separates an upward signal and a downward signal from each other, a second signal separation unit that is connected to the first cable terminal and separates the upward signal and the downward signal from each other, a first bypass line that connects at least the other one of the plurality of first input/output terminals and the second signal separation unit, and a first downward signal amplification unit that is connected between the first signal separation unit and the second signal separation unit; and a second relay apparatus comprising a second cable terminal to which the other end of the single coaxial cable is connected, a plurality of second input/output terminals installed to correspond to an independent MIMO path with a user terminal, a third signal separation unit that is connected to the second cable terminal and separates an upward signal and a downward signal from each other, a second bypass line that connects the third signal separation unit and at least one of the plurality of second input/output terminals, and a second downward signal amplification unit that is connected between the third signal separation unit and at least the other one of the plurality of second input/output terminals,

wherein, in a super heterodyne amplifier comprising a first part in which frequency down converters, a filter and an amplifier are sequentially connected in series, and a second part in which frequency up converters, a filter, an amplifier, a variable attenuator and a power amplifier are sequentially connected in series, the first downward signal amplification unit is configured of the first part of the super heterodyne amplifier, and the second downward signal amplification unit is configured of the second part of the super heterodyne amplifier.

10. The MIMO relay apparatus of claim 9, further comprising an upward signal division unit that divides the upward signal transmitted via the first bypass line and inputs the divided signals to the first signal separation unit.

11. The MIMO relay apparatus of claim 9, further comprising an output adjustment unit that adjusts an output level of a second downward signal output from the second downward signal amplification unit based on a first downward signal transmitted via the second bypass line.

12. The MIMO relay apparatus of claim 11, wherein the output adjustment unit comprises a first detection unit that detects the first downward signal transmitted via the second bypass line, a second detection unit that detects the second downward signal output from the second downward signal amplification unit, and a controller that adjusts an output level of the second downward signal by controlling a variable attenuator of the second downward signal amplification unit based on the detected, first downward signal.

13. The MIMO relay apparatus of claim 9, wherein the plurality of first input/output terminals connect a plurality of donor antennas, respectively.

14. The MIMO relay apparatus of claim 9, wherein the plurality of first input/output terminals respectively connect a plurality of cables connected to the base station or repeater.

15. The MIMO relay apparatus of claim 9, wherein the plurality of second input/output terminals respectively connect a plurality of service antennas.

16. The MIMO relay apparatus of claim 9, wherein at least one of the upward signal and the downward signal is an MIMO signal.

# FIG. 1

FIRST TRANSMISSION

$x_1$

SECOND TRANSMISSION

$x_2$

FIRST RECEIVING

$y_1 = h_{11} x_1 + h_{12} x_2$

$n_1$

SECOND RECEIVING

$y_2 = h_{21} x_1 + h_{22} x_2$

$n_2$

# FIG. 2

220

BASE STATION

$x_1$

$x_2$

$h_{11}$

$h_{21}$

210a

210

DOWNWARD SIGNAL   213

$y$

211

DUPLEXER

DOWNWARD AMPLIFIER

UPWARD AMPLIFIER

DUPLEXER

212

214

UPWARD SIGNAL

210b

$h11$

$h12$

230

user terminal

# FIG. 3

FIG. 4

FIG. 5

# FIG. 6

# FIG. 7

FIG. 8

EP 2 892 165 A1

FIG. 9

FIG. 10

## INTERNATIONAL SEARCH REPORT

| International application No. |
|---|
| **PCT/KR2012/011611** |

**A.    CLASSIFICATION OF SUBJECT MATTER**

*H04B 7/14(2006.01)i, H04B 7/04(2006.01)i*

According to International Patent Classification (IPC) or to both national classification and IPC

**B.    FIELDS SEARCHED**

Minimum documentation searched (classification system followed by classification symbols)
H04B 7/14; H04W 28/16; H04W 88/02; H04W 16/26; H04W 24/02; H04B 7/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: superheterodyne, amplifier, MIMO, repeater, signal, amplification, attenuation

**C.    DOCUMENTS CONSIDERED TO BE RELEVANT**

| Category* | Citation of document, with indication, where appropriate, of the relevant passages | Relevant to claim No. |
|---|---|---|
| A | KR 10-2005-0120972 A (SK TELECOM CO., LTD.) 26 December 2005<br>See abstract, page 3, line 19-page 4, line 26, figure 2. | 1-16 |
| A | KR 10-2008-0110016 A (KTFREETEL CO., LTD.) 18 December 2008<br>See abstract, paragraphs 26-38, figure 2. | 1-16 |
| A | WO 2009-069067 A2 (NOKIA CORPORATION) 04 June 2009<br>See abstract, page 1, line 20-page 6, line 23. | 1-16 |
| A | WO 2009-108116 A1 (CHALMERS INTELLECTUAL PROPERTY RIGHTS AB) 03<br>September 2009<br>See abstract. | 1-16 |

☐  Further documents are listed in the continuation of Box C.          ☒  See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 14 MAY 2013 (14.05.2013) | **15 MAY 2013 (15.05.2013)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2012/011611**

| Patent document cited in search report | Publication date | Patent family member | Publication date |
|---|---|---|---|
| KR 10-2005-0120972 A | 26.12.2005 | NONE | |
| KR 10-2008-0110016 A | 18.12.2008 | NONE | |
| WO 2009-069067 A2 | 04.06.2009 | CN 101878598 A | 03.11.2010 |
| | | EP 2220783 A2 | 25.08.2010 |
| | | KR 10-1176622 B1 | 23.08.2012 |
| | | KR 20100086064 A | 29.07.2010 |
| | | US 2009-0143008 A1 | 04.06.2009 |
| | | US 8064823 B2 | 22.11.2011 |
| | | WO 2009-069067 A3 | 03.09.2009 |
| WO 2009-108116 A1 | 03.09.2009 | CN 102138352 A | 27.07.2011 |
| | | EP 2255569 A1 | 01.12.2010 |
| | | US 2011-0002244 A1 | 06.01.2011 |

Form PCT/ISA/210 (patent family annex) (July 2009)